# EUROPEAN PATENT SPECIFICATION

(11) **EP 2 999 172 B1**
(45) Date of publication and mention of the grant of the patent: **17.05.2017**
(21) Application number: 14306440.0
(22) Date of filing: 18.09.2014
(51) Int. Cl.: H04L 12/701, H04L 29/06

(54) **METHOD AND DEVICES TO CERTIFY A TRUSTED PATH IN A SOFTWARE DEFINED NETWORK**
VERFAHREN UND VORRICHTUNGEN ZUR ZERTIFIZIERUNG EINES VERTRAUENSWÜRDIGEN PFADS IN EINEM SOFTWAREDEFINIERTEN NETZWERK
PROCÉDÉ ET DISPOSITIFS POUR CERTIFIER UN CHEMIN SÉCURISÉ DANS UN RÉSEAU DÉFINI PAR LOGICIEL

(43) Date of publication of application: 23.03.2016
(73) Proprietor: ALCATEL LUCENT, 92100 Boulogne-Billancourt (FR)
(72) Inventor: Betge-Brezetz, Stéphane, 91620 Nozay (FR); Kamga, Guy-Bertrand, 91620 Nozay (FR)
(74) Representative: Berthier, Karine

(56) References cited:
- US-A1- 2013 239 169
- US-A1- 2014 189 074

## Description

### BACKGROUND OF THE INVENTION

### Field of the invention

Software defined networking **(SDN)** is an approach to computer networking that allows network administrators to manage network services through abstraction of lower level functionality. This is done by decoupling the system that makes decisions about where traffic is sent (the control plane) from the underlying systems that forward traffic to the selected destination (the data plane).

Cloud computing is the delivery of computing as a service rather than a product, whereby shared resources, software, and information are provided to computers and other devices as a utility (like the electricity grid) over a network (typically the Internet). Clouds can be public, private or hybrid.

The present invention generally relates to the security of sensitive data in a cloud supported by a SDN. Security is a critical issue in such dynamic environment where data can easily be transferred between different servers and locations. A particular issue concerns the characteristics (e.g., location, security level) of the storage area for sensitive data, as this storage area must be compliant with enterprise or state regulation constraints applicable on this data. But, beyond controlling the storage area, there is also a specific need to control the path followed by the data when they move in the cloud. The selection of a path for transferring sensitive data must be made according to security policies. Preferably, one must then certify that these sensitive data are actually transferred via the selected path.

Known solutions for communication protection, e.g.:
- TLS (Transport Layer Security, a cryptographic protocol for secure Internet communication),
- SSL (Secure Sockets Layer, a protocol for encrypting information over the Internet),
- a VPN (virtual Private Network),
may not be considered as sufficient as they do not prevent inferring and then obtaining information from the traffic done between the two extremities (e.g. two virtual machines). For instance, the monitoring of the shape of the traffic (even encrypted) between two cloud entities (for instance belonging to two companies) can be used to infer the level of exchanges between these entities. Moreover, some denial of service attacks can also be performed on un-trusted or insufficiently secure nodes located on the path of the sensitive traffic (and then disturbing or blocking this sensitive traffic). We can also note that some regulations may also impose direct constraints on the data transport (e.g., data sovereignty initiatives such as the European "Schengen of data").

Finally, this requirement on trusted path for sensitive data may also be critical in the context of network function virtualization. Indeed, in a network function virtualization environment, different virtual network functions may exchange sensitive data over the network function virtualization infrastructure.

Such sensitive data can be internal telecommunication operator data, for instance sensitive data held in:
- A HSS (Home Subscriber Server),
- an Internet Protocol Multimedia subsystem (IMS) platform,
- a presence server,
- etc.

Sensitive data can as well be customers' data (for instance sensitive data of an enterprise that is using the telecommunication operator IMS Rich Communication Suite functions).

The dynamicity of the network function virtualization Infrastructure (for instance with the migrations of the virtual machines handling network function virtualizations) further increases this need of guaranteeing a trusted path between the network function virtualizations in the Cloud network infrastructure.

It then may be requested that sensitive data should cross the cloud network only in accordance to specific security or regulatory policies. For instance, a policy should state that the path followed by a sensitive data must not cross an un-trusted node (e.g., software switch), network zone, provider, etc. Also, other policies may state that the path must not cross a given area or country.

In order to tackle this problem of trusted path for sensitive data transferred in a cloud network, the emerging SDN technology appears very relevant as it makes networks being more programmable.

A known method for enforcing security policies in a telecommunication network comprises the following steps, before establishing a path between a source device and a destination device:
- sending a request, from the source device to a controlling entity, the request containing an identifier of the destination device and the security policy associated with the sensitive data to be sent,
- receiving, in the source node, a response sent from the controlling entity, the response containing information on a path to a network node able to transmit sensitive data to the destination device, the path satisfying the security policy. This known method enables to use a security policy (related to the sensitive data) to automatically configure a compliant path within a cloud networks to transport these data (and perform the necessary tracing if requested). The controlling entity is included in any network node. It determines the path to the destination device based on the security policy and the identifier of the destination device.
Patent Application US20140189074 discloses an orchestration device (e.g. rule enforcer and certifier) which specifies a routing policy to an SDN gateway. Said routing policy defines the path that data belonging to a given flow has to follow i.e. the precise sequence of hops to reach the destination. The SDN gateway provisions the required routing policy to the proper network devices (e.g. switches / routers) that are in charge of data forwarding.

Patent Application US20130239169 defines a method for sending a packet with sensitive information through a required path which conforms to certain requirements (e.g. security level of the intermediate nodes). The packet contains policy information that is used by the intermediate nodes, e.g. an indication of the path (list of nodes). Each intermediate node digitally signs the packets so that a final node could verify that the packet has followed the required path.

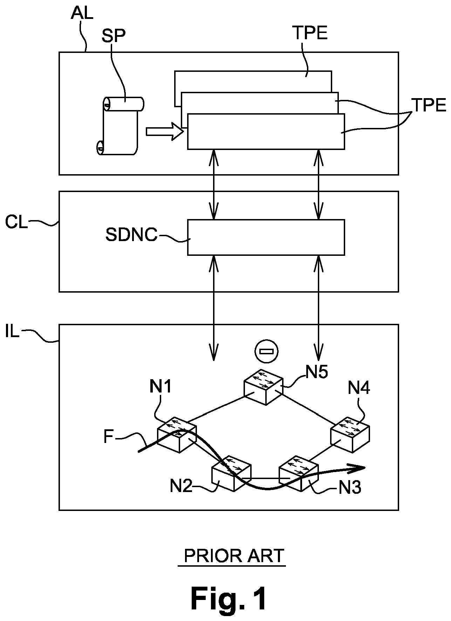

**Figure 1** a block diagram illustrating the principle of this known method. We consider an exemplary SDN network wherein:
- The infrastructure layer IL comprises nodes N1, ..., N5.
- The control layer CL comprises a classical SDN controller SDNC.
- The application layer AL comprises a plurality of controlling entities called "Trusted Path Enforcers" TPE and enforcing, in the network, a trusted path satisfying a given security policy SP. There is one trusted path enforcer TPE per data flow.

For instance, the OpenFlow protocol is used for communication between each SDN node N1,..., N5 and the SDN controller SDNC. The REST API (Representational State Transfer Application Programming Interface) is used for communication between each trusted path enforcer TPE and the SDN controller SDNC

For instance, a flow F must go from node N1 to node N4. There are two possible paths: N1-N2-N3-N4 or N1-N5-N4; but a security policy forbids going through the node N5. So a trusted path enforcer TPE decides that the flow must go via the path N1-N2-N3-N4.

However, such a trusted path enforcer is in fact not sufficient because it only configures, in the network, a trusted path compliant with a given security policy. Indeed, it is also needed to:
1. Provide some certificates (or strong/tamper-proof evidences) of the right enforcement of the policy (for instance for audit purposes).
2. Certify that, when transmitted in the network, the sensitive data are well using the configured trusted path.

### Description of the prior art

Various works are tackling the use of a SDN in order to establish a network path that satisfies some constraints of quality of service (e.g. bandwidth, latency, jitter) or reliability (e.g. using disjoint multipath), but there is no certification that a trusted path is actually used. These works cover the intra or inter domains and can leverage classical path computation approaches such as:
- RSVP (Resource Reservation Protocol),
- MPLS-TE (Multi Protocol Label Switching- Traffic Engineering),
- or IETF-PCE (Internet Engineering Task Force Path Computation Element). Nevertheless, these approaches are not targeting the establishment of a trusted path satisfying a given security constraint; even if some approaches mention this as a future direction. For instance, in the scope of the IETF-PCE working group, it is proposed an extension of the Path Computation Element Communication Protocol (PCEP) with the notion of "Explicit Route Exclusions". However, it is not mentioned in this work the notions of certifying a path configuration or certifying the path followed by a sensitive traffic.

Regarding certification, we can mention different works that use certification in a networking context such as:
- Open Shortest Path First (OSPF) with Digital Signature: A certificate is added to the LSA (Link-state advertisements) which is the message exchanged between routers. This allows certifying messages in OSPF (to avoid OSPF to be tampered).
- Trusted Router Discovery Protocol (TRDP) which offers a mechanism for discovering the trusted nodes in the network. This approach allows filtering "un-trusted nodes" in IPv4/IPv6 networking (to also avoid the traffic routing to be tampered).
- US patent 7,984,294 "Method and apparatus for trust based routing in data networks": This patent proposes a RSVP-based approach to check that a RSVP-based path is only crossing routers tagged as "trusted". It allows determining, once computed, if a path is trusted.

However, in these approaches, there is no notion of "trusted path" satisfying various security constraints (for instance on node location, network area, type, provider,...). Indeed, they are not really tackling this problem. Moreover, these approaches are also not addressing the context of SDN, wherein a central software module can dynamically compute and configure a trusted path in the network. Finally, we can note that these approaches are also not proposing a strong mechanism (e.g., hardware-based) able to provide strong security guarantees and certificates.

Related to this last point (offering strong security certificates), we can mention:
- the TPM (Trusted Platform Module),
- the HSM (Hardware Security Module),
- or the notion of "secure element" defined in the scope of the Global Platform Initiative.

These technologies offer some strong certifications on the security policy enforcement. They can notably enable a "chain of trust" on the entire software stack running in a cloud node (in the host operating system, the hypervisor, the virtual machine operating system, etc.); see for instance the Intext TXT solution. However, they have not been used for enforcing a trusted path in a network (i.e., between cloud nodes).

We can nevertheless mention the research project ESTER which has investigated the idea of embedding a secure element in a network node (an IP router) in order to sign and certify the exchanged OSPF messages. It corresponds then to the previous OSPF Digital Signature enforced by a hardware-based SE. The ESTER project has been pursued in the scope of the European SEED4C project that aims to embed secure elements in some cloud nodes, in order to notably control the transfer of a sensitive data (e.g., to prevent a sensitive data to be transferred by FTP in a node located in an un-authorized country or area). But, the idea of using a secure element embedded in a network node in order to guarantee the enforcement of a trusted path is not addressed in this SEED4C project.

Thus, there remains a need to provide a technical solution to:
1. Provide some certificates (or strong/tamper-proof evidences) of the right enforcement of the policy.
2. Certify that, when transmitted in the network, the sensitive data are actually using the configured trusted path.

This can be solved by applying, the method according to the invention.

### SUMMARY OF THE INVENTION

A first object of the invention is a method to certify a trusted path for transferring a given sensitive data flow in a software defined network comprising a plurality of nodes, a trusted path enforcer, and a trusted path certifier. It is characterized in that it comprises the following steps:
- sending at least one enforced flow rule, for configuring said trusted path, from the trusted path enforcer to flow rule certifiers respectively embedded in or connected to all the nodes of the trusted path;
- sending from each said flow rule certifier to the trusted path certifier:
   -- a flow rule certificate, if said flow rule certifier detects that an enforced flow rule it has received is actually satisfied by the configuration of the node where it is embedded in or connected to;
   -- a sensitive flow traces certificate, if said flow rule certifier detects that the given sensitive data flow is actually crossing the node where it is embedded in or connected to;
- collecting all the flow rule certificates sent, by the flow rule certifiers respectively embedded in or connected to all the nodes of the trusted path, to the trusted path certifier, and deducing from them whether each enforced flow rule is satisfied, or not;
- and collecting all the sensitive flow trace certificate sent, by the flow rule certifiers respectively embedded in or connected to all the nodes of the trusted path, to the trusted path certifier, and deducing from them whether the sensitive data flow has been correctly routed along the whole trusted path, or not.

Thanks to the steps of sending to a trusted path certifier a flow rule certificate and a sensitive flow traces certificate, generated by all the flow rule certifiers embedded in or connected to all the nodes of the trusted path, the trusted path certifier can deduce whether each enforced flow rule is satisfied, or not; and whether the sensitive data flow has been correctly routed along the whole trusted path, or not.

A second object of the invention is a trusted path certifier for implementing the method according to the invention.

A third object of the invention is a flow rule certifier for implementing the method according to the invention.

Other features and advantages of the present invention will become more apparent from the following detailed description of embodiments of the present invention, when taken in conjunction with the accompanying drawings.

### BRIEF DESCRIPTION OF THE DRAWINGS

In order to illustrate in detail features and advantages of embodiments of the present invention, the following description will be with reference to the accompanying drawings. If possible, like or similar reference numerals designate the same or similar components throughout the figures thereof and description, in which:
- Figure 1 (described above) is a block diagram illustrating the known method using "trusted path enforcers" to enforce, in a network, a path satisfying a given security policy, without any certification.
- Figure 2 is a block diagram illustrating the method according to the invention.
- Figure 3 is a block diagram of an embodiment of the system according to the invention, to certify a trusted path in a SDN network.
- Figure 4 is a more detailed block diagram of the architectures of a trusted path certifier and a secure element based flow rule certifier that are parts of the embodiment represented on figure 3.

### DETAILED DESCRIPTION OF THE PREFERRED EMBODIMENTS

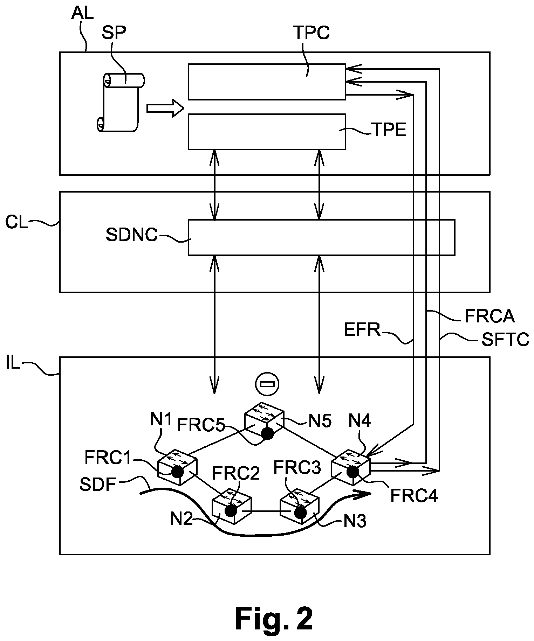

**Figure 2** is a block diagram illustrating the method according to the invention. We consider an exemplary SDN network wherein:
The infrastructure layer IL comprises SDN nodes N1, ..., N5.

The control layer CL comprises a classical SDN controller SDNC.

For each sensitive data flow, the application layer AL comprises a "trusted path certifier" TPC and a "trusted path enforcer" TPE, both receiving a security policy SP.

For instance, the OpenFlow protocol is used for the communication between each node N1,..., N5 and the SDN controller SDNC. The REST API (Representational State Transfer Application Programming Interface) is used for communication between each trusted path enforcer TPE or the trusted path certifier TPC, on one hand, and the SDN controller SDNC on the other hand.

The basic idea of the method consists in embedding secure elements respectively in some nodes of the network, each of these secure elements respectively comprises a "secure element based flow rule certifier" according to the invention. The secure element based flow rule certifier generates:
- flow rule certificates that will be used for deducing whether each enforced flow rule is satisfied, or not;
- and sensitive flow trace certificate that will be used for deducing whether each sensitive data flow has been correctly routed along the whole trusted path, or not.

A secure element is a hardware component (for instance a Java card or a flash memory card) which has a basic operating system in it (and also possibly a Java virtual machine). The secure element based flow rule certifier is a software module that will be executed in this secure element.

The idea is then to "embed"/"insert" the secure element (with the flow rule certifier running in it) in the node, for instance a switch. For this purpose, we can use existing interfaces of the node (e. g. universal serial bus (USB) interfaces) or we may think of other hardware integration.Other means of embedding the secure element can also be used (e.g., hardware integration of the secure element in the network node hardware, used of a secure element embedded in the CPU of the network node). Finally, software-based secure elements can also be used (for instance for software-based switches) even if the protection level will be lower than with a hardware-based secure element.

In the exemplary network SDN represented by **Figure 2****,** the network nodes N1, ..., N5 (Generally SDN switches but it can be other types of node, for instance routers) respectively comprise secure elements. These secure elements comprise secure element-based flow rule certifiers FRC1, FRC2, FRC3, FRC4, FRC5, respectively for the secure elements embedded in the nodes N1, N2, N3, N4, N5. On Figure 2, the rule certifiers FRC1, FRC2, FRC3, FRC4, FRC5 are represented without the embedding secure elements, for a better clarity.

In other examples, all the network nodes may not have an embedded secure element (it could then be an added value of some of the network nodes deployed in the appropriate way by the network architect).

In this example, a sensitive data flow SDF must be transferred from the node N1 to the node N4. The trusted path enforcer TPE establishes that the trusted path is N1-N2-N3-N4, as crossing the node N5 is forbidden for security reasons. The trusted path enforcer TPE configures all the nodes that are on the trusted path, i. e. N1,..., N4, via the SDN controller SDNC, for routing the given sensitive data flow SDF along the trusted path N1-N2-N3-N4.

In addition, the trusted path enforcer TPE configures the corresponding secure element based flow rule certifiers FRC1, FRC2, FRC3, FRC4, of all the nodes that are on the trusted path, i. e. N1,..., N4, by sending them respective "enforced flow rules" EFR, via the SDN controller SDNC.

So the secure element based flow rule certifiers FRC1, FRC2, FRC3, and FRC4 are configured in order to provide strong evidences that:
- The nodes between nodes N1 and N4, in this example, are well configured for using the trusted path N1-N2-N3-N4 (i.e., certifying that the requested security policies are well enforced in the nodes).
- When the given sensitive data flow SDF have been transferred, it has actually followed this trusted path N1-N2-N3-N4 (i.e., certifying that the trusted path has actually been followed).

The trusted path enforcer TPE is connected to the trusted path certifier TPC for providing this latter with:
- Enforced flow rules EFR.
- Identifiers of these enforced flow rules EFR.
- Identifiers of the nodes constituting the trusted path, N1-N2-N3-N4 in this example.

The trusted path certifier TPC configures the secure element based flow rule certifiers of all the nodes that comprise a flow rule certifier (FRC1, FRC2, FRC3, FRC4, FRC5 in this example) by sending them "Flow Rules" EFR that the secure element based flow rule certifiers FRC1, FRC2, FRC3, FRC4, FRC5, have to certify. If the result of the flow rules checking is positive, each flow rule certifier that is concerned for a given data flow (FRC1, FRC2, FRC3, FRC4, in this example) sends back a "Flow Rules Certificate" FRCA to the trusted path certifier TPC.

The trusted path certifier TPC receives from each flow rule enforcer FRC1, FRC2, FRC3, FRC4 respectively embedded in or connected to the nodes N1-N2-N3-N4 of the trusted path:
-- a flow rule certificate FRCA, if said flow rule certifier detects that a received flow rule EFR is actually satisfied by the given sensitive data flow in the node where it is embedded in or connected to;
-- a sensitive flow trace certificate SFTC, if said flow rule certifier FRC4 detects that the given sensitive data flow SDF is actually crossing the node N4 where it is embedded in or connected to.

Note that the Figure 2 represents a rule certificate FRA and a sensitive flow trace certificate SFTC for the node N4 only, for clarifying the figure. Of course, the other nodes N1, N2, N3, of the trusted path, similarly send a rule certificate FRA and a sensitive flow trace certificate SFTC to the trusted path certifier TPC.

The trusted path certifier TPC collects all the flow rule certificates FRCA sent by all the nodes N1, N2, N3, N4 of the trusted path, and deduces from them whether the trusted path is certified or not. In this example, it deduces from them that the trusted path N1-N2-N3-N4 is well configured (i.e., it certifies that all the flow rules ER corresponding to the wanted trusted path are duly applied to configure the trusted path N1-N2-N3-N4). So the first objective of the method has been achieved.

The trusted path certifier TPC collects all the sensitive flow traces certificate SFTC sent by all the nodes N1, N2, N3, N4 of the trusted path and deduces from them whether the given sensitive data flow SDF has been transferred via the trusted path N1-N2-N3-N4 or not. In this example, it certifies that the sensitive traffic SDF has been duly transferred through the requested trusted path N1-N2-N3-N4. So the second objective of the method has been achieved

Note the following points:
- Thanks to a crypto-key stored in each secure element based flow rule certifiers FRC1, FRC2, FRC3, FRC4, each certificate is also signed by the secure element.
- The secure elements (embedding the flow rule certifiers) are preferably software ones. However, as some software secure elements already exist, the method according to the invention may also be applicable by using them (which however offers a lower level of confidence regarding the case where hardware secure elements are used).
- The method according to the invention can also be applied when using a software switch (the secure element being then a software secure element or even a hardware secure element embedded in the physical host where the software switch is running).

This embodiment uses the OpenFlow protocol for the communication between the application layer AL and the control layer CL. However, the method is supporting any other known protocol between a SDN node and the SDN controller, for instance the standardized protocols or the proprietary protocols generally used for managing a network (NetConf, SNMP,...).

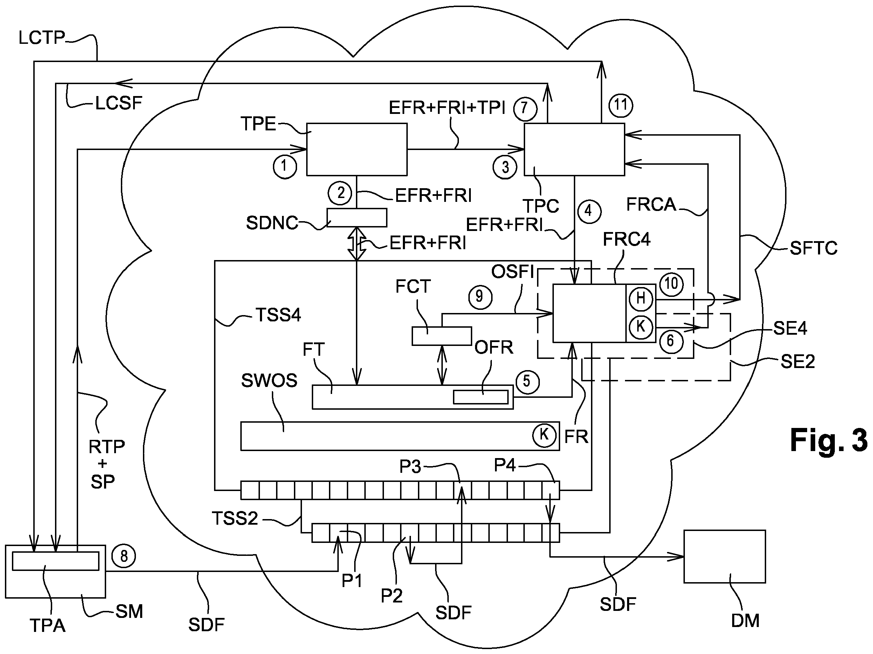

**Figure 3** is a block diagram of an embodiment of the system according to the invention, to certify a trusted path in a SDN network. It comprises:
- A "trusted path certifier" TPC.
- A "trusted path enforcer" TPE.
- A SDN controller SDNC.
- A plurality of SDN switches. Only two exemplary trusted SDN switches TSS4, TSS2 are represented on Figure 3 for illustrating an exemplary secured path TSS4-TSS2.

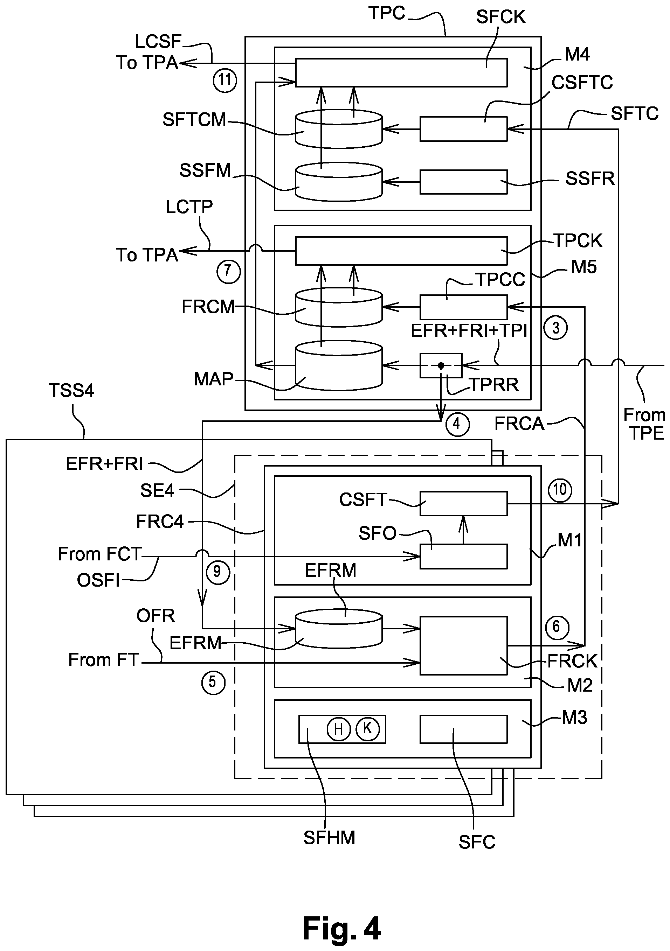

Secure elements SE4 and SE2 are respectively embedded or connected to these switches TSS4, TSS2. Each secure element SE4 and SE2 comprises a secure element based flow rule certifier. Only the secure element based flow rule certifier **FRC4** of the secure element SE4 is represented in details on Figures 3 and 4. The secure element based flow rule certifier of the secure element SE2 is not represented for the sake of clarity.

We consider an exemplary source machine SM sending a sensitive data flow SDF and an exemplary destination machine DM receiving this sensitive data flow SDF. They can be physical servers, virtual machines, etc. The source machine SM sends a sensitive data flow SDF to the port P1 of the switch TSS2. This flow SDF exits at port P2 of the SDN switch TSS2. Then it enters the switch TSS4 at port P3. It exits the switch TSS4 at port P4, and is delivered to the destination machine DM.

The switch TSS4 comprises:
- A "flow counter table" FCT.
- A "Flow Table" FT storing "observed flow rules" OFR.
- A switch operating system SWOS.
- A plurality of ports: In particular P3, P4 already mentioned.

The switch TSS4 is indeed storing the values of flow counters which give for instance, per flow, the number of received packets, the number of received bytes, or the observed flow duration. These counters are stored in the flow counter table FCT associated with the flow table FT in the switch. TSS4.The switch TSS2 is similar to the switch TSS4, and comprises the ports 1 and P2 in particular.

For instance, the OpenFlow protocol is used for the communication between each switch TSS4, TSS2, and the SDN controller SDNC. The REST API (Representational State Transfer Application Programming Interface) is used for the communication between the trusted path enforcer TPE and the trusted path certifier TPC, on one hand, and the SDN controller SDNC on the other hand.

**Figure 4** is a more detailed block diagram of the architectures of the trusted path certifier TPC and of the secure element based flow rule certifier FRC4, of the embodiment represented on Figure 3.

The flow rule certifier FRC4 comprises:
- A first module M1, which comprises:
   -- A sensitive flow observer SFO, receiving information OSFI about observed sensitive flows, from the flow counter table FCT.
   -- A generator of certified sensitive flow traces CSFT that receives
   values of flow counters, supplied by the sensitive flow observer SFO.
- A second module M2, which comprises:
   -- A memory EFRMR storing enforced flow rules EFR and enforced flow rules identifiers FRI supplied by the trusted path certifier (TCP).
   -- A SDN flow rules checker FRCK receiving: an enforced flow rule EFR and an enforced flow rule identifier FRI, both supplied by the memory EFRMR; and an observed rule OFR supplied by the flow table FT
- A third module M3, which comprises:
   -- A memory SFHM storing a switch firmware hash, and a hash key H.
   -- A SDN switch firmware checker SFC.

The trusted path certifier TPC comprises:
- A first module M4 for checking a sensitive flow, which comprises:
   -- A sensitive flow checker SFCK.
   -- A certified sensitive flow traces collector CSFTC.
   -- A memory SFTCM for storing sensitive flow traces certificates.
   -- A sent sensitive flow recorder SSFR.
   -- A memory SSFM for storing the sent sensitive flows and the respectively corresponding trusted path identifiers
- A second module M5 for checking a trusted path, which comprises:
   -- A trusted path checker TPCK.
   -- A trusted path certificate collector TPCC.
   -- A memory FRCM for storing flow rules certificates.
   -- A trusted path request recorder TPRR.
   -- A memory MAP for storing the mapping of the trusted path identifiers to the flow rules identifiers.

This embodiment of the system according to the invention is based on basic means allowing to enforce (but not certify) a trusted path in a SDN network. These basic means comprise the two following modules:
- The trusted path agent TPA located in the source machine SM that needs sending the sensitive data flow SDF to the destination machine DM. It is configured for requesting a path, satisfying a given security policy, from a trusted path enforcer TPE.
- A trusted path enforcer TPE that is configured for:
   -- determining a trusted path compliant with the given policy,
   -- and configuring this path in trusted switches of the SDN network, through the SDN controller ISDC.

The method according to the invention is implemented by additional means, used for certifying the trusted path:
- The trusted path certifier TPCT.
- The secure element flow based certifier FRC4, and a similar secure element flow based certifier, embedded in or connected to the switch TSS2.

The description of the processing in this embodiment will be made with reference to **Figures 3** **and** **4****.**

A provisioning step is first achieved. It consists in:
- Configuring a crypto-key K in the switch operating system SWOS and in the switch firmware hash SFH of the secure element based flow rule identifier FRC4 of the switch TSS4. This crypto-key K allows the switch TSS4 to recognize (and trust) this secure element when it will be embedded in it, and then to let this secure element access to its flow table FT and its flow counter table FCT. A similar configuration step is made for the switch TSS2.
- Configuring a hash key H in the switch firmware SFH of the secure element based flow rule identifier FRC4. This hash key H allows it to certify the firmware running in the switch TSS4. Such a hash key is defined per firmware release. This certification is done by the SDN switch firmware checker SFC. This ensures that the switch firmware is not tampered, and then that the flow table FT is also not tampered (i. e. the flow rules stored in it will actually be applied), and finally that the flow counter table FCT is also not tampered (i. e. the observed sensitive flows are well corresponding to the actual sensitive traffic ST). A similar configuration step is made for the switch TSS2.

In this embodiment, the method according to the invention further comprises the following steps:
**Step 1:** The trusted path agent TPA of the source machine SM sends a request RTP, and a security policy SP, to the trusted path enforcer TPE for requesting the setup of a trusted path between the source machine SM and the destination machine DM, this trusted path having to respect the security policy SP.
**Step 2:** The trusted path enforcer TPE sends enforced flow rules EFR and corresponding flow rules identifiers FRI to the trusted switches TSS4 and TSS2, via the SDN controller SDNC, because the trusted path must go through the switches TSS4 and TSS2 in this example. Then the enforced flow rules EFR and the corresponding flow rules identifiers FRI are stored in the respective flow tables FT of the switches TSS4 and TSS2.
**Step 3:** The trusted path enforcer TPE sends the enforced flow rules EFR, the corresponding flow rules identifiers FRI, and the trusted path identifiers TPI, to the trusted path request recorder TPRR of the trusted path certifier TPCT.
**Step 4:** The trusted path request recorder TPRR stores them in the memory MAP, mapping the enforced flow rules EFR to the corresponding trusted path identifiers TPI. The trusted path request recorder TPRR also forwards the enforced flow rules EFR, the corresponding flow rules identifiers FRI, and the trusted path identifiers TPI to the memory EFRM of the flow rule certifier FRC4.
Note that, for this step 4, the trusted path certifier TPCT can use a separate network (e.g., a dedicated network of secure elements as proposed in the SEED4C project, or even a wireless network if the secure element also comprises a wireless interface). In another embodiment, it can also use the OpenFlow interface of the switch (after encryption of the enforced flow rules).
**Step 5:** The memory EFRM supplies the enforced flow rule EFR, the corresponding flow rule identifier FRI, and the trusted path identifier TPI, corresponding to the given sensitive data flow SDF, to the flow rule checker FRCK of the flow rule certifier FRC4. At the same time, the flow table FT of the switch TSS4 supplies observed flow rules OFR, corresponding to the same given sensitive data flow, to the SDN flow rule checker FRCK.
**Step 6:** The flow rules checker FRCK compares the enforced flow rules EFR and the observed flow rules OFR corresponding to the same given sensitive data flow SDF. If the comparison is positive, the flow rules checker FRCK sends a flow rule **certificate FRCA** to the trusted path certificate collector TPCC of the trusted path certifier TPCT. This certificate FRCA is signed with the crypto-key and contains the flow rules identifier. The trusted path certificate collector TPCC stores the flow rule certificate FRCA in the flow rule certificates memory FRCM. It does the same step for the certificate FRCA originating from the flow rule checkers of all the switches constituting the trusted path, i. e. TSS4, TSS2 in this example.
**Step 7:** The trusted path checker TPCK of the trusted path certifier TPCT receives a flow rule certificate FRCA from the flow rule certificate memory FRCM, and receives a trusted path identifier from the memory MAP. It deduces from them whether the enforced flow rule are all satisfied in the nodes N1, N2, N3, N4 of the trusted path, or not. Then it computes a **"list of certified trust paths" LCSF** and sends it to the trusted path agent TPA of the source machine SM.
**Step 8:** The source machine SM starts transmitting the sensitive data flow SDF to the port P1 of the SDN switch TSS2. This flow exits at port P2 of the SDN switch TSS2. Then it enters the switch TSS4 at port P3. It exits the switch TSS4 at port P4, and is delivered to the destination machine DM.
**Step 9:** The flow counter table FCT of the switch TSS4 sends information about the observed sensitive data flows, OSFI, to the sensitive flow observer SFO of the flow rule certifier FRC4.
**Step 10:** The sensitive flow observer SFO computes a **"sensitive flow traces certificate" SFTC** (containing its corresponding flow rule identifier), for the given sensitive data flow SDF; and then sends it to the certified sensitive flow traces collector CSFTC of the trusted path certifier TPCT. This certificate SFTC is signed with the crypto-key and contains the flow rules identifier. Then the certified sensitive flow traces collector CSFTC stores it in the memory SFTCM for storing sensitive flow traces certificates.
**Step 11:** The memory SSFM is storing the sent sensitive flows and the respectively corresponding trusted path identifiers, provided by the sent sensitive flow recorder SSFR. The memory SSFM supplies sensitive flow traces certificates, and trusted path identifiers corresponding to the considered trusted path, N1-N2-N3-N4 in this example, to the sensitive flow checker SFCK. So the trusted path certifier TCP is gathering and storing all the sensitive flow traces certificates SFTC from all the secure element flow rule certifiers, along the trusted path N1-N2-N3-N4. Then, for each sensitive flow transferred, it checks that this sensitive flow has been correctly routed along the whole trusted path, or not. This is done by the sensitive flow checker SFCK using:
   -- (i) the sensitive flow traces certificates SFTC supplied by the memory SFTCM,
   -- (ii) the recorded sent sensitive flows supplied by the memory SSFM with their corresponding trusted path identifiers, and
   -- (iii) the mapping (trusted path identifier / flow rules identifier) supplied by the sent sensitive flows memory SSFM, to make the link between the trusted path identifier and the sensitive flow traces certificates SFTC (containing their corresponding flow rule identifier).

Then the sensitive flow checker SFCK sends a list of certified sensitive flows LCSF to the trusted path agent TPA of the source machine SM.

## Claims

1. Method to certify a trusted path (N1-N2-N3-N4) for transferring a given sensitive data flow (SDF) in a software defined network comprising a plurality of nodes (N1, N2, N3, N4, N5), a trusted path enforcer (TPE), and a trusted path certifier (TPC); **characterized in that** it comprises the following steps:
- sending (2) at least one enforced flow rule (EFR), for configuring said trusted path, from the trusted path enforcer (TPE) to flow rule certifiers (FRC1, FRC2, FRC3, FRC4) respectively embedded in or connected to all the nodes of the trusted path (N1, N2, N3, N4);
- sending from each said flow rule certifier (FRC1, FRC2, FRC3, FRC4) to the trusted path certifier (TPC):
-- a flow rule certificate (FRCA), if said flow rule certifier detects that an enforced flow rule (EFR) it has received is actually satisfied by the configuration of the node where it is embedded in or connected to;
-- a sensitive flow traces certificate (SFTC), if said flow rule certifier detects that the given sensitive data flow (SDF) is actually crossing the node where it is embedded in or connected to;
- collecting all the flow rule certificates (FRCA) sent, by the flow rule certifiers (FRC1, FRC2, FRC3, FRC4) respectively embedded in or connected to all the nodes of the trusted path (N1, N2, N3, N4), to the trusted path certifier (TPC), and deducing from them whether each enforced flow rule is satisfied, or not;
- and collecting all the sensitive flow trace certificate (SFTC) sent, by the flow rule certifiers (FRC1, FRC2, FRC3, FRC4) respectively embedded in or connected to all the nodes of the trusted path (N1, N2, N3, N4), to the trusted path certifier (TPC) and deducing from them whether the sensitive data flow has been correctly routed along the whole trusted path, or not.

2. Method according to claim 1, further comprising the step of signing with a crypto-key stored in a flow rule enforcer (FRC1, FRC2, FRC3, FRC4), a flow rule certificate (FRCA) and a sensitive flow trace certificate (SFTC) sent by said flow rule enforcer (FRC1, FRC2, FRC3, FRC4) to said trusted path certifier (TPC).

3. A trusted path certifier (TPC) to certify a trusted path (N1-N2-N3-N4) for transferring a given sensitive data flow (SDF) in a software defined network comprising a plurality of nodes (N1, N2, N3, N4, N5) and a trusted path enforcer (TPE);
**characterized in that** it comprises a processor configured for:
- sending (2) at least one enforced flow rule (EFR) to at least one flow rule enforcer (FRC1, FRC2, FRC3, FRC4) embedded in or connected to a node (N4), for configuring said flow rule enforcer (FRC1, FRC2, FRC3, FRC4);
- receiving (6, 10) from each flow rule enforcer (FRC1, FRC2, FRC3, FRC4):
-- a flow rule certificate (FRCA), if said flow rule certifier detects that a received flow rule (EFR) is actually satisfied by the given sensitive data flow in the node where it is embedded in or connected to;
-- a sensitive flow traces certificate (SFTC), if said flow rule certifier detects that the given sensitive data flow (SDF) is actually crossing the node where it is embedded in or connected to;
- collecting all the flow rule certificates (FRCA) sent, by flow rule enforcers (FRC1, FRC2, FRC3, FRC4) embedded in or connected to all the nodes of the trusted path, to the trusted path certifier (TPC), and deducing from them whether the enforced flow rule is satisfied, or not;
- collecting all the sensitive flow trace certificate (SFTC) sent, by the flow rule enforcers (FRC1, FRC2, FRC3, FRC4) embedded in or connected to all the nodes of the trusted path, to the trusted path certifier (TPC), and deducing from them whether the sensitive data flow has been correctly routed along the whole trusted path or not.

4. A flow rule certifier (FRC4) to certify a trusted path (N1-N2-N3-N4) for transferring a given sensitive data flow (SDF) in a software defined network comprising a plurality of nodes (N1, N2, N3, N4, N5), a trusted path enforcer (TPE), and a trusted path certifier (TPC);
**characterized in that** it comprises a processor configured for sending to the trusted path certifier (TPC):
-- a flow rule certificate (FRCA), if said flow rule certifier (FRC4) detects that a received flow rule (EFR) is actually satisfied by the given sensitive data flow in the node (N4) where it is embedded in or connected to;
-- a sensitive flow trace certificate (SFTC), if said flow rule certifier (FRC4) detects that the given sensitive data flow (SDF) is actually crossing the node (N4) where it is embedded in or connected to.

5. A digital data storage medium storing a set of machine executable program instructions, which, when executed on a computer, cause the computer to perform all the method steps of the method according to claims 1-2.

6. A computer program product comprising computer-executable instructions for performing a method when the program is run on a computer, the method comprising the steps of claims 1-2.

## Patentansprüche

1. Verfahren zur Zertifizierung eines vertrauenswürdigen Pfads (N1-N2-N3-N4) zum Übertragen eines vorgegebenen sensiblen Datenflusses (SDF) in einem softwaredefinierten Netz, welches eine Vielzahl von Knoten (N1, N2, N3, N4, N5), einen Trusted Path Enforcer (TPE) zum Erzwingen eines vertrauenswürdigen Pfads und einen Trusted Path Certifier (TPC) zum Zertifizieren eines vertrauenswürdigen Pfads umfasst; **dadurch gekennzeichnet, dass** das Verfahren die folgenden Schritte umfasst:
- das Senden (2) mindestens einer Regel für erzwungenen Datenfluss (Enforced Flow Rule, EFR) zum Konfigurieren besagten vertrauenswürdigen Pfads von dem Trusted Path Enforcer (TPE) an eine Vielzahl von Flussregelzertifizierern (Flow Rule Certifiers, FRC1, FRC2, FRC3, FRC4), die jeweils in alle Knoten des vertrauenswürdigen Pfads (N1, N2, N3, N4) eingebettet oder mit diesen verbunden sind;
- das Senden folgender Elemente von jedem Flow Rule Certifier (FRC1, FRC2, FRC3, FRC4) an den Trusted Path Certifier (TPC):
-- ein Flussregelzertifikat (Flow Rule Certificate, FRCA) dann, wenn besagter Flow Rule Certifier feststellt, dass eine von ihm erhaltene Enforced Flow Rule (EFR) von der Konfiguration des Knotens tatsächlich erfüllt wird, in den er eingebettet oder mit dem er verbunden ist;
-- ein Sensitive Flow Trace Certificate (SFTC) zur Zertifizierung des Verlaufs sensibler Datenflüsse dann, wenn besagter Flow Rule Certifier feststellt, dass der vorgegebene sensible Datenfluss (SDF) tatsächlich den Knoten durchquert, in den er eingebettet oder mit dem er verbunden ist;
- das Sammeln aller Flow Rule Certificates (FRCA), die von den Flow Rule Certifiern (FRC1, FRC2, FRC3, FRC4), die jeweils in alle Knoten des vertrauenswürdigen Pfads (N1, N2, N3, N4) eingebettet oder mit ihnen verbunden sind, an den Trusted Path Certifier (TPC) gesendet wurden, und das Deduzieren aus ihnen, ob jede Enforced Flow Rule erfüllt ist oder nicht;
- und das Sammeln aller Sensitive Flow Trace Certificates (SFTC), die von den Flow Rule Certifiern (FRC1, FRC2, FRC3, FRC4), die jeweils in alle Knoten des vertrauenswürdigen Pfads (N1, N2, N3, N4) eingebettet oder mit ihnen verbunden sind, an den Trusted Path Certifier (TPC) gesendet wurden, und das Deduzieren aus ihnen, ob der sensible Datenfluss entlang dem vertrauenswürdigen Pfad korrekt geroutet wurde oder nicht.

2. Verfahren nach Anspruch 1, weiterhin den Schritt umfassend, mit einem Krypto-Schlüssel, der in einem Flow Rule Enforcer (FRC1, FRC2, FRC3, FRC4) gespeichert ist, ein Flow Rule Certificate (FRCA) und ein Sensitive Flow Trace Certificate (SFTC) zu signieren, welche von besagtem Flow Rule Enforcer (FRC1, FRC2, FRC3, FRC4) an besagten Trusted Path Certifier (TPC) gesendet wurden.

3. Trusted Path Certifier (TPC) zur Zertifizierung eines vertrauenswürdigen Pfads (N1-N2-N3-N4) zum Übertragen eines vorgegebenen sensiblen Datenflusses (SDF) in einem softwaredefinierten Netz, welches eine Vielzahl von Knoten (N1, N2, N3, N4, N5) und einen Trusted Path Enforcer (TPE) umfasst;
**dadurch gekennzeichnet, dass** er einen Prozessor umfasst, der konfiguriert ist für:
- das Senden (2) mindestens einer Enforced Flow Rule (EFR) an mindestens einen Flow Rule Enforcer (FRC1, FRC2, FRC3, FRC4), der in einen Knoten (N4) eingebettet oder mit diesem verbunden ist, um besagten Flow Rule Enforcer (FRC1, FRC2, FRC3, FRC4) zu konfigurieren;
- den Empfang (6, 10) folgender Elemente von jedem Flow Rule Enforcer (FRC1, FRC2, FRC3, FRC4):
-- ein Flow Rule Certificate (FRCA) dann, wenn besagter Flow Rule Certifier feststellt, dass eine von ihm erhaltene Enforced Flow Rule (EFR) vom gegebenen sensiblen Datenfluss in dem Knoten tatsächlich erfüllt wird, in den er eingebettet oder mit dem er verbunden ist;
-- ein Sensitive Flow Trace Certificate (SFTC) zur Zertifizierung des Verlaufs sensibler Datenflüsse dann, wenn besagter Flow Rule Certifier feststellt, dass der vorgegebene sensible Datenfluss (SDF) tatsächlich den Knoten durchquert, in den er eingebettet oder mit dem er verbunden ist;
- das Sammeln aller Flow Rule Certificates (FRCA), die von Flow Rule Enforcern (FRC1, FRC2, FRC3, FRC4), die jeweils in alle Knoten des vertrauenswürdigen Pfads eingebettet oder mit ihnen verbunden sind, an den Trusted Path Certifier (TPC) gesendet wurden, und das Deduzieren aus ihnen, ob jede Enforced Flow Rule erfüllt ist oder nicht;
- das Sammeln aller Sensitive Flow Trace Certificates (SFTC), die von den Flow Rule Enforcern (FRC1, FRC2, FRC3, FRC4), die jeweils in alle Knoten des vertrauenswürdigen Pfads eingebettet oder mit ihnen verbunden sind, an den Trusted Path Certifier (TPC) gesendet wurden, und das Deduzieren aus ihnen, ob der sensible Datenfluss entlang dem vertrauenswürdigen Pfad korrekt geroutet wurde oder nicht.

4. Flow Rule Certifier (FRC4) zur Zertifizierung eines vertrauenswürdigen Pfads (N1-N2-N3-N4) zum Übertragen eines vorgegebenen sensiblen Datenflusses (SDF) in einem softwaredefinierten Netz, welches eine Vielzahl von Knoten (N1, N2, N3, N4, N5), einen Trusted Path Enforcer (TPE) und einen Trusted Path Certifier (TPC) umfasst;
**dadurch gekennzeichnet, dass** er einen Prozessor umfasst, der dafür konfiguriert ist, um Folgendes an den Trusted Path Certifier (TPC) zu senden:
-- ein Flow Rule Certificate (FRCA) dann, wenn besagter Flow Rule Certifier (FRC4) feststellt, dass eine von ihm erhaltene Enforced Flow Rule (EFR) vom gegebenen sensiblen Datenfluss in dem Knoten (N4) tatsächlich erfüllt wird, in den er eingebettet oder mit dem er verbunden ist;
-- ein Sensitive Flow Trace Certificate (SFTC) zur Zertifizierung des Verlaufs sensibler Datenflüsse dann, wenn besagter Flow Rule Certifier (FRC4) feststellt, dass der vorgegebene sensible Datenfluss (SDF) tatsächlich den Knoten (N4) durchquert, in den er eingebettet oder mit dem er verbunden ist;

5. Digitales Speichermedium zur Speicherung eines Satzes ausführbarer Programmbefehle, die, wenn durch einen Computer ausgeführt, den Computer dazu veranlassen, alle Schritte des Verfahrens nach den Ansprüchen 1 bis 2 auszuführen.

6. Computerprogramm-Produkt, das von einem Computer ausführbare Befehle zur Durchführung eines Verfahrens umfasst, wenn das Programm auf einem Computer ausgeführt wird, wobei das Verfahren die Schritte nach den Ansprüchen 1 bis 2 umfasst.

## Revendications

1. Procédé destiné à certifier un chemin sécurisé (N1-N2-N3-N4) pour transférer un flux de données sensible (SDF) donné dans un réseau défini par logiciel comprenant une pluralité de noeuds (N1, N2, N3, N4, N5), un dispositif de mise en application de chemin sécurisé (TPE) et un certificateur de chemin sécurisé (TPC) ;
**caractérisé en ce qu'**il comprend les étapes suivantes :
- envoyer (2) au moins une règle de flux en vigueur (EFR), pour configurer ledit chemin sécurisé, du dispositif de mise en application de chemin sécurisé (TPE) aux certificateurs de règle de flux (FRC1, FRC2, FRC3, FRC4) respectivement intégrés dans ou connectés à tous les noeuds du chemin sécurisé (N1, N2, N3, N4) ;
- envoyer de chacun desdits certificateurs de règle de flux (FR1, FR2, FR3, FR4) au certificateur de chemin sécurisé (TPC) :
-- un certificat de règle de flux (FRCA), si ledit certificateur de règle de flux détecte qu'une règle de flux en vigueur (EFR) qu'il a reçue est effectivement respectée par la configuration du noeud dans lequel il est intégré ou auquel il est connecté ;
-- un certificat de traces de flux sensible (SFTC), si ledit certificateur de règle de flux détecte que le flux de données sensible (SDF) donné traverse effectivement le noeud dans lequel il est intégré ou auquel il est connecté ;
- recueillir tous les certificats de règle de flux (FRCA) envoyés, par les certificateurs de règle de flux (FRC1, FRC2, FRC3, FRC4) respectivement intégrés dans ou connectés à tous les noeuds du chemin sécurisé (N1, N2, N3, N4), au certificateur de chemin sécurisé (TPC), et en déduire si chaque règle de flux en vigueur est respectée, ou non ; et
- recueillir tous les certificats de traces de flux sensible (SFTC) envoyés, par les certificateurs de règle de flux (FRC1, FRC2, FRC3, FRC4) respectivement intégrés dans ou connectés à tous les noeuds du chemin sécurisé (N1, N2, N3, N4), au certificateur de chemin sécurisé (TPC), et en déduire si le flux de données sensible a été correctement acheminé sur la totalité du chemin sécurisé, ou non.

2. Procédé selon la revendication 1, comprenant en outre l'étape de signature à l'aide d'une clé de chiffrement stockée dans un dispositif de mise en application de règle de flux (FRC1, FRC2, FRC3, FRC4), un certificat de règle de flux (FRCA) et un certificat de traces de flux sensible (SFTC) envoyé par ledit dispositif de mise en application de règle de flux (FRC1, FRC2, FRC3, FRC4) audit certificateur de chemin sécurisé (TPC).

3. Certificateur de chemin sécurisé (TPC) destiné à certifier un chemin sécurisé (N1-N2-N3-N4) pour transférer un flux de données sensible (SDF) donné dans un réseau défini par logiciel comprenant une pluralité de noeuds (N1, N2, N3, N4, N5) et un dispositif de mise en application de chemin sécurisé (TPE) ;
**caractérisé en ce qu'**il comprend un processeur configuré pour :
- envoyer (2) au moins une règle de flux en vigueur (EFR) à au moins un dispositif de mise en application de règle de flux (FRC1, FRC2, FRC3, FRC4) intégré dans ou connecté à un noeud (N4), pour configurer ledit dispositif de mise en application de règle de flux (FRC1, FRC2, FRC3, FRC4) ;
- recevoir (6, 10) de chaque dispositif de mise en application de règle de flux (FRC1, FRC2, FRC3, FRC4) :
-- un certificat de règle de flux (FRCA), si ledit certificateur de règle de flux détecte qu'une règle de flux (EFR) reçue est effectivement respectée par le flux de données sensible donné dans le noeud dans lequel il est intégré ou auquel il est connecté ;
-- un certificat de traces de flux sensible (SFTC), si ledit certificateur de règle de flux détecte que le flux de données sensible (SDF) donné traverse effectivement le noeud dans lequel il est intégré ou auquel il est connecté ;
- recueillir tous les certificats de règle de flux (FRCA) envoyés, par les dispositifs de mise en application de règle de flux (FRC1, FRC2, FRC3, FRC4) intégrés dans ou connectés à tous les noeuds du chemin sécurisé, au certificateur de chemin sécurisé (TPC), et en déduire si la règle de flux en vigueur est respectée, ou non ;
- recueillir tous les certificats de traces de flux sensible (SFTC) envoyés, par les dispositifs de mise en application de règle de flux (FRC1, FRC2, FRC3, FRC4) intégrés dans ou connectés à tous les noeuds du chemin sécurisé, au certificateur de chemin sécurisé (TPC), et en déduire si le flux de données sensible a été correctement acheminé sur la totalité du chemin sécurisé, ou non.

4. Certificateur de règle de flux (FRC4) destiné à certifier un chemin sécurisé (N1-N2-N3-N4) pour transférer un flux de données sensible (SDF) donné dans un réseau défini par logiciel comprenant une pluralité de noeuds (N1, N2, N3, N4, N5), un dispositif de mise en application de chemin sécurisé (TPE) et un certificateur de chemin sécurisé (TPC) ;
**caractérisé en ce qu'**il comprend un processeur configuré pour envoyer au certificateur de chemin sécurisé (TPC) :
-- un certificat de règle de flux (FRCA), si ledit certificateur de règle de flux (FRC4) détecte qu'une règle de flux (EFR) reçue est effectivement respectée par le flux de données sensible donné dans le noeud (N4) dans lequel il est intégré ou auquel il est connecté ;
-- un certificat de traces de flux sensible (SFTC), si ledit certificateur de règle de flux (FRC4) détecte que le flux de données sensible (SDF) donné traverse effectivement le noeud (N4) dans lequel il est intégré ou auquel il est connecté.

5. Support de stockage de données numérique destiné à stocker un jeu d'instructions de programme exécutables par une machine, qui, lorsqu'il est exécuté sur un ordinateur, commande à l'ordinateur de réaliser toutes les étapes du procédé selon les revendications 1 à 2.

6. Produit-programme informatique comprenant des instructions exécutables par un ordinateur destiné à réaliser un procédé lorsque le programme est exécuté sur un ordinateur, le procédé comprenant les étapes selon les revendications 1 à 2.
